# EUROPEAN PATENT APPLICATION

(11) **EP 2 738 730 A1**
(43) Date of publication of application: **04.06.2014**
(21) Application number: 13188820.8
(22) Date of filing: 16.10.2013
(51) Int. Cl.: G06Q 50/00, H04L 12/58

(54) **Apparatus and method of linking social network service application**

(30) Priority: 30.11.2012 KR 20120138403
(71) Applicant: Samsung Electronics Co., Ltd, Gyeonggi-do 443-742 (KR)
(72) Inventor: Joo, Jong-Sung, 443-742 Gyeonggi-do (KR); Kim, Min-Chul, 443-742 Gyeonggi-do (KR); Sampath, Kumar Chitra, 443-742 Gyeonggi-do (KR); Yang, Hui-Chul, 443-742 Gyeonggi-do (KR)
(74) Representative: Birchenough, Lewis

(57) **Abstract**

A method for enabling easy access to an application linked to contact information is provided. The method includes retrieving a substitute contact means or available applications for contact information of a message while a text messaging screen is being displayed, displaying respective indicators of at least one application with the message, and turning to a running screen of an application that corresponds to a selected indicator. By doing this, a user may easily run the substitute contact means or associated application without leaving the text messaging screen while using the text messaging. It thus gives an advantage of effectively guaranteeing continuity of conversation from the perspective of the user.

## Description

### BACKGROUND OF THE INVENTION

### 1. Field of the Invention:

The present invention relates to a mobile device with a touch-based input interface. More particularly, the present invention relates to an apparatus and method of linking social networking service applications.

### 2. Description of the Related Art:

As technology advances, mobile devices are able to provide more diverse services and optional functions. Among the optional functions, text messaging is one of the most common functions. Text messaging has many advantages, such as sending messages inexpensively, allowing a message to be sent to many people simultaneously, and allowing a message to be checked by a recipient at any time, which make it common for people to use the function.

Such text messaging provides a service to display content of transmitted or received messages with contact information about the message. With the text messaging function, users may easily send or check messages to which files, such as photos, videos, etc. are attached. However, if a message to be sent is over a certain amount (in bytes), it is converted into an MMS message, which increases the cost of text messaging. Furthermore, the typical text messaging function supported by the mobile device has a capacity limit, which is of concern when sending a large-capacity file.

To improve the usefulness of the mobile device and achieve relatively easy data transmission, various practical applications have been developed. For example, a Social Networking Service (SNS) application offers an environment in which to actively share and spread a user's personal information and diverse content information (e.g., video, photos, SMS, etc.). With SNS, the user of the mobile device may communicate messages with the other party (or the other parties) using a number of SNS applications, such as Twitter®, Facebook®, MySpace®, FourSquare®, mini-homepages, etc. in addition to the text messaging application.

However, for this message communication, such SNS applications need to be installed in the user's mobile device and the other party must also sign up for the same SNS. Recent mobile devices, such as smartphones and tablet PCs, may store at least tens to hundreds of applications and have shortcut keys to run the applications displayed in the form of icons on touch screens of the mobile devices. As many applications satisfying users' needs as well as different kinds of SNS applications have emerged, new problems have also arisen. For example, a mobile device must store many applications and the number of icons for the respective applications to be displayed on a relatively small screen of the mobile device is significantly limited. Thus, the user may feel inconvenienced when searching the icons one by one in order to find an SNS application the user wants among a plurality of application icons that are displayed on the touch screen.

Furthermore, text messaging of the related art only allows very limited display of information about the other party, e.g., a phone number or a name of the other party regarding the message, but does not display e.g., any substitute contact information and associated application for the other party.

These days, interest in the design and convenience of User Interfaces (UIs) of mobile devices is growing. For example, implementation of a UI environment that enables a user to use a mobile device's functions more easily and conveniently has become an issue. Thus, multifaceted attempts have been made to improve convenience in using the mobile device and implement new functions in response to the demand for additional functions. In this regard, if the text messaging screen could offer a substitute contact means or associated applications based on the other party's contact, user convenience may be further increased. Accordingly, there is a need for an improved apparatus and method for enabling easy access to an application linked to contact information.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide an apparatus and method of enabling easy access to an application linked to contact information.

Another aspect of the present invention is to provide an apparatus and method of representing a substitute contact means or available application for the other party's contact information on a text messaging screen.

In accordance with an aspect of the present invention, a method of linking a Social Network Service (SNS) application in a mobile device is provided. The method includes retrieving at least one application from among a plurality of applications, which is linkable based on contact information of a message requested to be output, displaying the message with respective indicators to represent the at least one application, and displaying, upon selection of any of the respective indicators to represent the at least one application, a running screen of an application represented by the selected indicator.

In accordance with another aspect of the present invention, an apparatus for linking an SNS application in a mobile device is provided. The apparatus includes a display unit for displaying a message list screen, and a controller for retrieving at least one application from among a plurality of applications, which is linkable based on contact information of a message requested to be output in the message list screen, for controlling to display the message with respective indicators to represent the at least one application, and for controlling to display, upon selection of any of the respective indicators to represent the at least one application, a running screen of an application represented by the selected indicator in the display unit.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a schematic block diagram of a mobile device according to an exemplary embodiment of the present invention;

FIG. 2 is a front view of a mobile device according to an exemplary embodiment of the present invention;

FIG. 3 is a rear view of a mobile device according to an exemplary embodiment of the present invention;

FIG. 4 is a schematic flowchart illustrating a method of linking to an application based on contact information in a mobile device according to an exemplary embodiment of the present invention;

FIG. 5 is a schematic flowchart illustrating a method of linking to an application based on the other party's contact information stored in a mobile device according to an exemplary embodiment of the present invention;

FIG. 6 is a schematic flowchart illustrating a method of linking to an application based on the other party's contact information not stored in a mobile device according to an exemplary embodiment of the present invention;

FIG. 7 illustrates screens in terms of the method of FIG. 5 according to an exemplary embodiment of the present invention;

FIG. 8 illustrates screens in terms of the method of FIG. 6 according to an exemplary embodiment of the present invention; and

FIG. 9 illustrates screens in terms of a method of linking an application based on representative contact information of an organization or a group, according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It will be understood that the singular forms "a", "an" and "the" include plural forms referents unless the context clearly indicates otherwise. Thus, for example, reference to "a component surface" includes reference to one or more of such surfaces.

An exemplary apparatus and method of providing linkable applications based on contact information will be described below in connection with hand-held mobile devices, such as cell phones, smart phones, tablet PCs, and the like. However, it is to be understood that this is merely for convenience of description and application of the invention is not limited thereto but may be applied to various electronic devices equipped with touch screens, such as Global Positioning System (GPSs) devices, televisions, bank's Automatic Teller Machines (ATMs), store's Point of Sale (POS) devices, and the like.

Exemplary of embodiments of the present invention provide an apparatus and a method for enabling easy access to an application linked to contact information. The method includes retrieving a substitute contact means or available applications for contact information of a message to be displayed on a text messaging screen, displaying respective indicators to represent at least one application with the message, and turning to a running screen of an application that corresponds to a selected indicator. By doing this, a user may easily run the substitute contact means or associated application without leaving the text messaging screen while using text messaging. In addition, from the perspective of the user, the continuity of an ongoing conversation with the other party by means of the text messaging is essentially guaranteed.

As such, exemplary embodiments of the present invention provide a method to more intuitively use an application linked to contact information in a mobile device by providing a User Interface (UI) for enabling easy access to the linkable application generated based on the contact information. Such a contact information-based application is represented using an indicator, such as e.g., an icon and the indicator may be shown on every running screen in which contact information operated by the mobile device is displayed.

Configuration of a mobile device and method of controlling operations of the mobile device according to exemplary embodiments of the present invention will now be described.

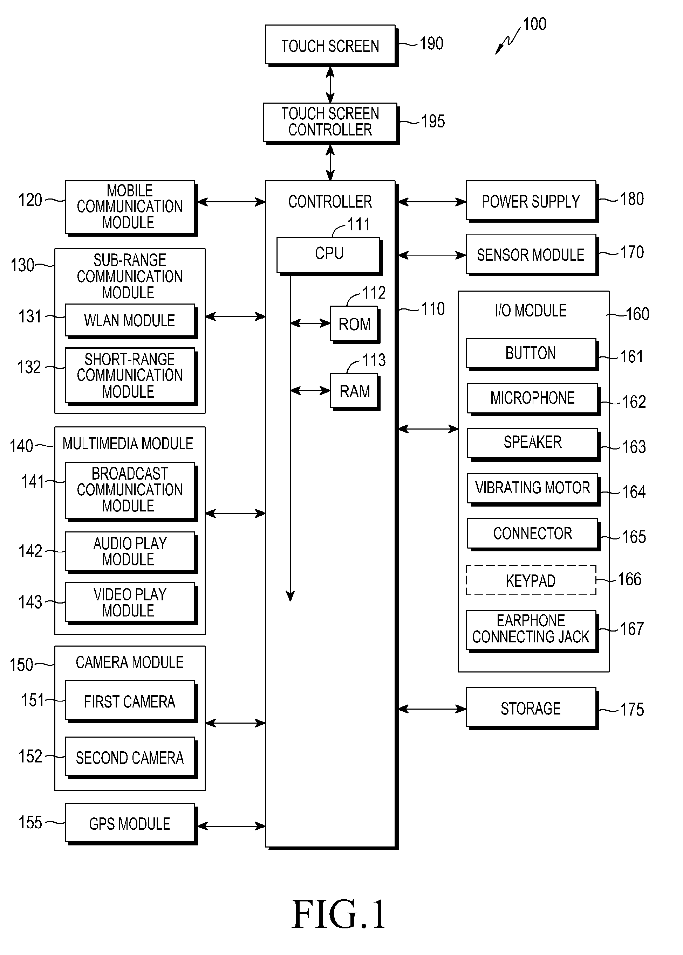

FIG. 1 is a schematic block diagram of a mobile device according to an exemplary embodiment of the present invention.

Referring to FIG. 1, the mobile device 100 (herein also referred to as 'apparatus') may be connected to an external device (not shown) by using an external device connection, such as a sub-communication module 130, a connector 165, and an earphone connecting jack 167. The "external device" may include a variety of devices, such as earphones, external speakers, Universal Serial Bus (USB) memories, chargers, cradles/docks, Digital Multimedia Broadcasting (DMB) antennas, mobile payment related devices, health care devices (e.g., blood sugar testers), game consoles, vehicle navigations, or the like, which are removable from the mobile device 100 and connected directly thereto or via an intermediary, e.g., a cable. The "external device" may also include a short range communication device that may be wirelessly connected to the mobile device 100 via short range communication, such as Bluetooth, Near Field Communication (NFC), etc., and a WiFi Direct communication device, a wireless Access Point (AP), etc. Furthermore, the external device may include any other device, such as a cell phone, a smartphone, a tablet PC, a desktop PC, and a server.

The mobile device 100 further includes a touch screen 190 and a touch screen controller 195. The mobile device 100 also includes a controller 110, the mobile communication module 120, the sub-communication module 130, a multimedia module 140, a camera module 150, a GPS module 155, an input/output module 160, a sensor module 170, a storage 175, and a power supply 180. The sub-communication module 130 includes at least one of a Wireless Local Area Network (WLAN) module 131 and a short-range communication module 132, and the multimedia module 140 includes at least one of a broadcast communication module 141, an audio play module 142, and a video play module 143. The camera module 150 includes at least one of a first camera 151 and a second camera 152, and the input/output module 160 includes at least one of buttons 161, a microphone 162, a speaker 163, a vibration motor 164, the connector 165, and a keypad 166. In this exemplary embodiment, the touch screen 190 (also referred to as a display unit) and the touch screen controller 195 are taken as examples of a display unit and a display controller, respectively.

The controller 110 may include a Central Processing Unit (CPU) 111, a Read Only Memory (ROM) 112 for storing a control program to control the mobile device 100, and a Random Access Memory (RAM) 113 for storing signals or data received from an external source or for being used as a memory space for storing results of programs executed in the mobile device 100. The CPU 111 may include a single core, dual cores, triple cores, or quad cores. The CPU 111, ROM 112, and RAM 113 may be connected to each other via an internal bus.

The controller 110 may control the mobile communication module 120, the sub-communication module 130, the multimedia module 140, the camera module 150, the GPS module, the input/output module 160, the sensor module 170, the storage 175, the power supply 180, the touch screen 190, and the touch screen controller 195. The controller 110 controls general operations of the mobile device 100. More particularly, when requested by an input means to display a message, the controller 110 controls to search for a substitute contact means or associated application linkable to the message, display an indicator for the substitute contact means or associated application searched for in a message screen of the touch screen 190, and upon selection of the indicator in the message screen, run the corresponding application and display the application's running screen in the touch screen 190.

The mobile communication module 120 connects the mobile device 100 to an external device through mobile communication using one or more antennas (not shown) under control of the controller 110. The mobile communication module 120 transmits/receives wireless signals for voice calls, video conference calls, Short Message Service (SMS) messages, or Multimedia Message Service (MMS) messages to/from a cell phone (not shown), a smart phone (not shown), a tablet PC (not shown), or another device (not shown), the phones having phone numbers entered into the mobile device 100.

The sub-communication module 130 may include at least one of the WLAN module 131 and the short-range communication module 132. For example, the sub-communication module 130 may include either the WLAN module 131 or the-short range communication module 132, or both.

The WLAN module 131 may be connected to the Internet in a place where there is a wireless AP (not shown), under control of the controller 110. The WLAN module 131 supports the Institute of Electrical and Electronics Engineer's (IEEE's) WLAN standard IEEE802.11x. The short-range communication module 132 may conduct short-range communication between the mobile device 100 and an image rendering device (not shown) under control of the controller 110. The short-range communication may include Bluetooth, Infrared Data Association (IrDA), WiFi-Direct, NFC, etc.

The mobile device 100 may include at least one of the mobile communication module 120, the WLAN module 131 and the short-range communication module 132 based on the performance. For example, the mobile device 100 may include a combination of the mobile communication module 120, the WLAN module 131 and the short-range communication module 132 based on the performance.

The multimedia module 140 may include the broadcast communication module 141, the audio play module 142, or the video play module 143. The broadcast communication module 141 may receive broadcast signals (e.g., television broadcast signals, radio broadcast signals, or data broadcast signals) and additional broadcast information (e.g., Electric Program Guide (EPG) or Electric Service Guide (ESG)) transmitted from a broadcasting station through a broadcast communication antenna (not shown) under control of the controller 110. The audio play module 142 may play digital audio files (e.g., files having extensions, such as mp3, wma, ogg, or wav) stored or received under control of the controller 110. The video play module 143 may play digital video files (e.g., files having extensions, such as mpeg, mpg, mp4, avi, mov, or mkv) stored or received under control of the controller 110. The video play module 143 may also play digital audio files.

The multimedia module 140 may include the audio play module 142 and the video play module 143 except for the broadcast communication module 141. The audio play module 142 or video play module 143 of the multimedia module 140 may be included in the controller 110.

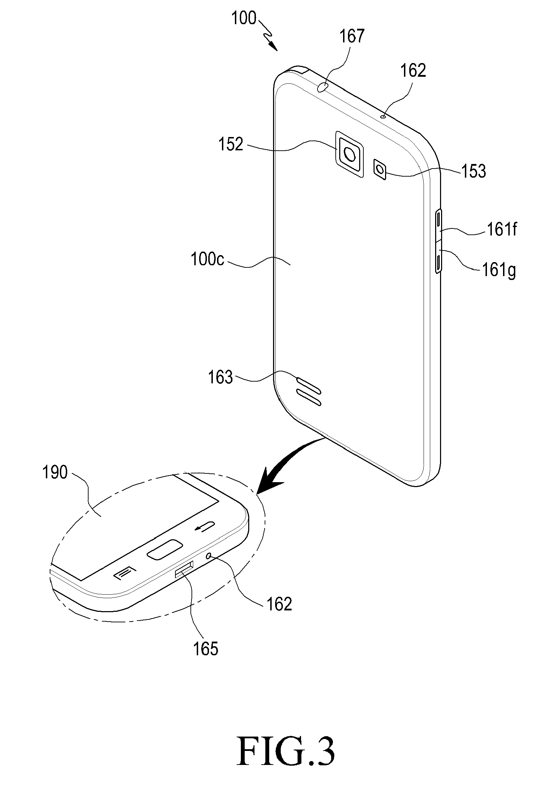

The camera module 150 may include at least one of the first and second cameras 151 and 152 for capturing still images or video images under control of the controller 110. Furthermore, the first or second camera 151 or 152 may include an auxiliary light source (e.g., flash 153, FIG. 3) for providing an amount of light that may be required for capturing an image. The first camera 151 may be placed on the front of the mobile device 100 and the second camera 152 may be placed on the back of the mobile device 100. In another exemplary implementation, the first and second cameras 151 and 152 may be arranged adjacent to each other (e.g., the distance between the first and second cameras 151 and 152 may be in the range between 1 to 8 cm), capturing 3D still images or 3D video images.

The GPS module 155 receives radio signals from a plurality of GPS satellites (not shown) in Earth's orbit, and may calculate the position of the mobile device 100 by using time of arrival from the GPS satellites to the mobile device 100.

The input/output module 160 may include at least one of a plurality of buttons 161, the microphone 162, the speaker 163, the vibrating motor 164, the connector 165, and the keypad 166.

The at least one button 161 may be arranged on the front, side, or back of the housing of the mobile device 100, and may include at least one of a power/lock button (not shown), a volume button (not shown), a menu button, a home button, a back button, a search button, and the like.

The microphone 162 generates electric signals by receiving a voice or a sound under control of the controller 110.

The speaker 163 may output sounds corresponding to various signals (e.g., radio signals, broadcast signals, digital audio files, digital video files, photography signals, etc.) from the mobile communication module 120, the sub-communication module 130, the multimedia module 140, or the camera module 150 to the outside under control of the controller 110. The speaker 163 may output sounds (e.g., button-press sounds, ringback tones, etc.) that correspond to functions performed by the mobile device 100. There may be one or multiple speakers 163 arranged in various positions of the housing of the mobile device 100.

The vibrating motor 164 may convert an electric signal to a mechanical vibration under control of the controller 110. For example, the mobile device 100 in a vibrating mode operates the vibrating motor 164 when receiving a voice call from another device (not shown). There may be one or more vibration motors 164 inside the housing of the mobile device 100. The vibration motor 164 may operate in response to a touch activity or continuous touches of a user over the touch screen 190.

The connector 165 may be used as an interface for connecting the mobile device 100 to the external device (not shown) or a power source (not shown). Under control of the controller 110, the mobile device 100 may transmit data stored in the storage 175 of the mobile device 100 to the external device via a cable connected to the connector 165, or receive data from the external device. Furthermore, the mobile device 100 may be powered by the power source via a cable connected to the connector 165 or may charge a battery (not shown) with the power source.

The keypad 166 may receive a key input from the user to control the mobile device 100. The keypad 166 includes a physical keypad (not shown) formed in the mobile device 100, or a virtual keypad (not shown) displayed on the touch screen 190. The mechanical keypad formed in the mobile device 100 may be excluded depending on the performance or structure of the mobile device 100.

An earphone (not shown) may be inserted into the earphone connecting jack 167 and thus connected to the mobile device 100.

The sensor module 170 includes at least one sensor for detecting a status of the mobile device 100. For example, the sensor module 170 may include a proximity sensor for detecting proximity of a user to the mobile device 10, an illumination sensor (not shown) for detecting an amount of ambient light of the mobile device 100, a motion sensor (not shown) for detecting the motion of the mobile device 100 (e.g., rotation of the mobile device 100, acceleration or vibration applied to the mobile device 100, etc.), a geomagnetic sensor (not shown) for detecting a compass point using the geomagnetic field, a gravity sensor for detecting a direction of gravity, and an altimeter for detecting an altitude (by measuring atmospheric pressure, etc.). At least one sensor may detect the status and generate a corresponding signal to transmit to the controller 110. The sensor of the sensor module 170 may be added or removed depending on the performance of the mobile device 100.

The storage 175 may store signals or data input/output according to operations of the mobile communication module 120, the sub-communication module 130, the multimedia module 140, the camera module 150, the GPS module 155, the input/output module 160, the sensor module 170, or the touch screen 190 under control of the controller 110. The storage 175 may store the control programs and applications for controlling the mobile device 100 or the controller 110.

The term "storage" implies not only the storage 175, but also the ROM 112 and the RAM 113 in the controller 110, or a memory card (not shown) (e.g., an SD card, a memory stick, etc.) installed in the mobile device 100. The storage may also include a non-volatile memory, a volatile memory, a Hard Disc Drive (HDD), a Solid State Drive (SSD), and the like.

The power supply 180 may supply power to one or more batteries (not shown) placed inside the housing of the mobile device 100 under control of the controller 110. The one or more batteries power the mobile device 100. The power supply 180 may supply the mobile device 100 with the power input from the external power source (not shown) via a cable connected to the connector 165. The power supply 180 may also supply the mobile device 100 with wireless power from an external power source using a wireless charging technology.

The touch screen 190 may provide the user with a user interface for various services (e.g., call, data transmission, broadcasting, photography services, etc.). The touch screen 190 may send an analog signal corresponding to at least one touch input to the user interface to the touch screen controller 195. The touch screen 190 may receive the at least one touch from a physical contact by the user (e.g., the user's finger or thumb) or via a touchable input device (e.g., a stylus pen). The touch screen 190 may receive consecutive moves of one of the at least one touch. The touch screen 190 may send an analog signal corresponding to the consecutive moves of the input touch to the touch screen controller 195.

Touches in the present invention are not limited to physical touches by a physical contact of the user or contacts with the touchable input means, but may also include a "touchless" contact (e.g., maintaining a detectable distance, e.g., less than 1 mm, between the touch screen 190 and the user's body or touchable input means). The detectable distance from the touch screen 190 may vary depending on the performance or structure of the mobile device 100, and in particular, the touch screen 190 may output different values (e.g., current values) for touch detection and hovering detection to distinguishably detect a touch event occurred by a contact with the user's body or the touchable input means and a touchless input (e.g., a hovering event). Furthermore, the touch screen 190 may output different values (e.g., current values) for hovering detection over a distance between where the hovering event occurs and the touch screen 190.

The touch screen 190 may be implemented using a resistive, capacitive, infrared, or acoustic wave technology.

The touch screen controller 195 converts the analog signal received from the touch screen 190 to a digital signal (e.g., XY coordinates) and transmits the digital signal to the controller 110. The controller 110 may control the touch screen 190 by using the digital signal received from the touch screen controller 195. For example, in response to the touch event or the hovering event, the controller 110 may enable a shortcut icon (not shown) displayed on the touch screen 190 to be selected or to be executed. The touch screen controller 195 may also be incorporated in the controller 110.

Further, the touch screen controller 195 may determine the distance between where the hovering event occurs and the touch screen 190 by detecting a value (e.g., a current value) output through the touch screen 190, converting the determined distance to a digital signal (e.g., in Z coordinate), and providing the digital signal to the controller 110.

The touch screen 190 may include at least two touch screen panels for detecting touches or proximity thereto by the user's body or the touchable input means to receive both inputs by the user's body or the touchable input means simultaneously. The at least two touch screen panels provide different output values to the touch screen controller 195, and the touch screen controller 195 may differentiate inputs made by the user's body and inputs made by the touchable input means through the touch screen by differently recognizing the values input from the at least two touch screen panels.

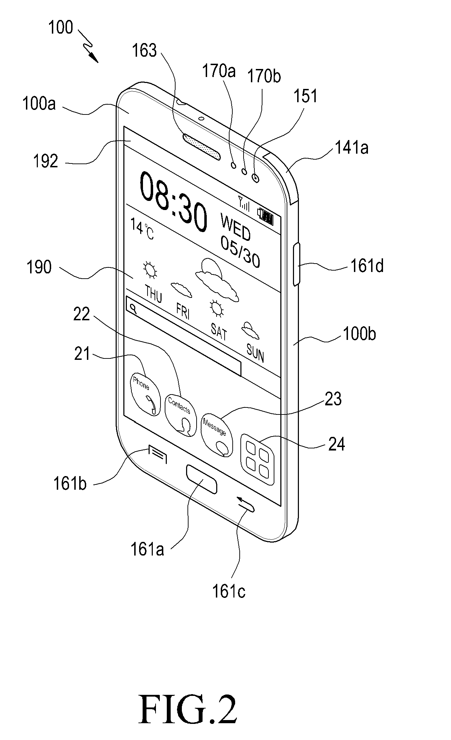

FIG. 2 is a front view of a mobile device according to an exemplary embodiment of the present invention. FIG. 3 is a rear view of a mobile device according to an exemplary embodiment of the present invention.

Referring to FIG. 2, the front face 100a of the mobile device 100 has the touch screen 190 arranged in the center. The touch screen 190 is formed so as to occupy most of the front face 100a of the mobile device 100. In FIG. 2, the touch screen 190 shows an example of displaying a main home screen. In an exemplary implementation, the main home screen is a first screen to be displayed on the touch screen 190 when the mobile device 100 is powered on. In case the mobile device 100 has multiple pages of different home screens, the main home screen may be the first of the home screens. In the main home screen, shortcut icons 21, 22, and 23 for running frequently-used applications, a main menu key 24, the time, local weather, etc. may be displayed. If selected, the main menu key 24 displays a menu screen on the touch screen 190. In an upper part of the touch screen 190, there may be a status bar 192 in which to display a status of the mobile device 100, such as a battery charging state, the intensity of received signals, the current time, etc.

In a lower part of the touch screen 190, there may be arranged a home button 161a, a menu button 161b, and a back button 161c.

When selected, the home button 161a displays the main home screen on the touch screen 190. For example, if the home button 161a is touched while any home screen other than the main home screen or a menu screen is displayed in the touch screen 190, the main home screen may be displayed on the touch screen 190. Furthermore, while applications are running on the touch screen 190, if the home button 161a is touched, the main home screen, as shown in FIG. 2, may be displayed on the touch screen 190. The home button 161a may also be used to display recently used applications or a task manager on the touch screen 190.

The menu button 161b provides a link menu that may be used on the touch screen 190. The link menu may include a widget addition menu, a background change menu, a search menu, an edit menu, an environment setting menu, etc.

The back button 161c, when touched, may display a screen that was displayed before a current screen or stop a most recently used application.

The first camera 151, the illumination sensor 170a, and the proximity sensor 170b may be placed on the edge of the front face 100a of the mobile device 100. On the back 100c of the mobile device 100, the second camera 152, the flash 153, and the speaker 163 may be arranged. Notably, the speaker 163 may include a first output located on the front 100a of the mobile device 100 as well as a second output located on the back 100c of the mobile terminal 100.

A power/reset button 161d, volume buttons 161f and 161g, a terrestrial DMB antenna 141a for broadcast reception, one or more microphones 162, etc. may be placed on the side 100b of the mobile device 100. The DMB antenna 141a may be fixed to the mobile device 100, or be removably arranged. On the lower side of the mobile device 100, the connector 165 is formed. The connector 165 has a number of electrodes and may be connected to an external apparatus via a cable. On the upper side of the mobile device 100, the earphone connecting jack 167 may be formed. The earphone connecting jack 167 may have the earphone inserted thereto.

On a lower side of the mobile device 100, a stylus pen (not shown) may be attached. A stylus pen may be inserted and kept in a hole of the mobile device 100 and be drawn out and detached from the mobile device 100. A pen-removable recognition switch (not shown) that operates in response to attachment and detachment of the stylus pen is equipped in an area inside the mobile device 100 where the stylus pen is kept, and sends a signal that corresponds to the attachment or the detachment of the stylus pen to the controller 100.

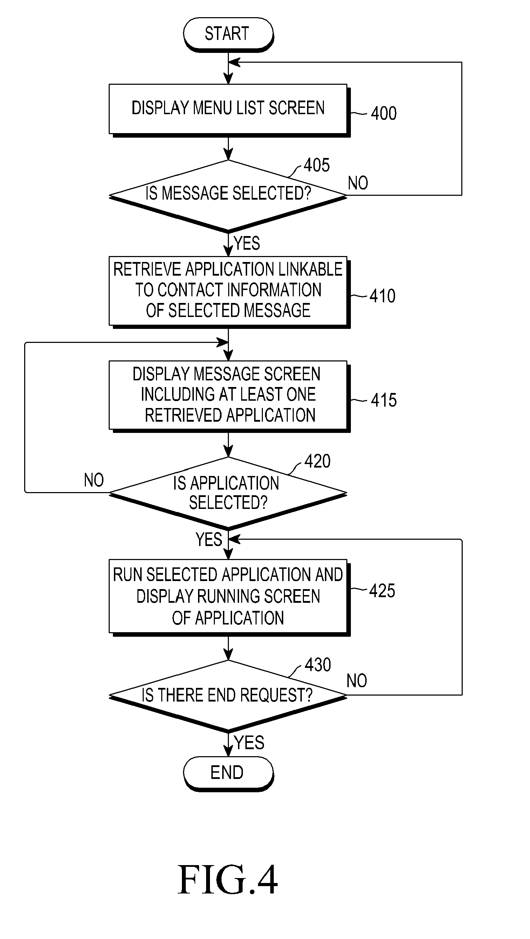

FIG. 4 is a schematic flowchart illustrating a method of linking to an application based on contact information in a mobile device according to an exemplary embodiment of the present invention.

Operations of the exemplary method may be controlled by a controller, such as controller 110 illustrated in FIG. 1. Such a contact information-based application may be represented on every running screen on which contact information operated by the mobile device is displayed. An exemplary embodiment where the indicator is also displayed on the message screen will be described below. However, the present invention is not limited to displaying the message screen, but may be applied to displaying various contact information-based running screens in which respective contact information in a contact list to be displayed when a contact application is selected in the home screen is displayed with the corresponding indicator in an area in which the contact information is displayed.

Referring to FIG. 4, upon request for message output, the controller 110 runs a message application and sends a message or displays a message list screen to check a message, at step 400. In FIG. 4, the exemplary embodiment of the present invention describes a situation in which a message is selected in the message list screen that contains transmitted or received messages. However, in other exemplary embodiments, displaying the message screen for the user to check a message may be implemented in various ways, including display of a screen including a newly received message as soon as the corresponding indicator is selected.

At step 405, the controller 110 determines whether the user selects a message, that is whether the user selects to write a message or to read a message from among stored messages, through a touch or an input means, such as the stylus pen. Upon selection of the message, the controller 110 retrieves at least one application that may be linked to contact information of the selected message at step 410. The controller 110 then displays a message screen containing the at least one application at step 415. In exemplary embodiments of the present invention, applications that may be linked to contact information of a message may include Social Networking Service (SNS) applications, such as mini-homepages, micro blogs, ChatOn®, Kakao Talk®, Facebook®, Twitter®, FourSquare®, MySpace®, and the like, as well as email applications like Gmail. Besides, the applications that may be linked to contact information of a message may, of course, include anything to offer a service that may form an online social network of users.

The at least one retrieved application may be displayed in the message screen by means of an indicator, such as an icon. The controller 110 determines if any application is selected by the user from among the at least one retrieved application, at step 420. If no application is selected, the process goes back to step 415 to continue displaying the message screen.

In this regard, an interactive message screen may be displayed while the user chats with the other party, and in the interactive message screen updated chat messages are displayed until an application is selected. On the contrary, upon selection of any application in the message screen by the user at step 420, the controller 110 runs the application and displays the running screen of the application, at step 425. If an end request is made at step 430, the controller 110 stops running the application, or else if there is no end request at step 430, the controller 110 goes back to step 425 to keep displaying the running screen of the application.

Generally, in the mobile device, an SNS provides an automatic login service that maintains the mobile device in the login state until the mobile device logs out from the SNS. For example, if a user of the mobile device selects an indicator that corresponds to the Twitter service while checking a message, the Twitter service is immediately available to the user without need for re-login. If an application is selected by the user, the mobile device transmits login information, e.g., the other party's phone number to a server that provides the SNS that corresponds to the application and receives information about the SNS from the server, thus displaying a running screen of the SNS. In this manner, the controller 110 may link a number of applications to the contact information of a message and operate them.

In the related art, the user was merely able to know of contact information, e.g., the other party's name and phone number, in terms of a message through the existing message screen. However, according to exemplary embodiments of the present invention, the user may be informed about another contact means to contact the other party based on the other party's phone number, so that the user may make an easier contact with the other party. In other words, even if the user of the mobile device did not register the other party at a frequently used SNS, upon reception of a message from the other party, the mobile device determines whether the other party signs up for the SNS based on its contact information and displays the contact information of the other party and an application that enables the SNS. Thus, the user may use other contact means, e.g., the SNS application than the existing stored contact information.

Exemplary embodiments in which the contact information-based application is an SNS application will be described below. The exemplary embodiments will be divided into situations in which the contact information of the message has been stored beforehand and in which the contact information of the message has not yet been stored. Furthermore, to facilitate a better understanding of the present invention, screens in which SNS applications are displayed will be illustrated.

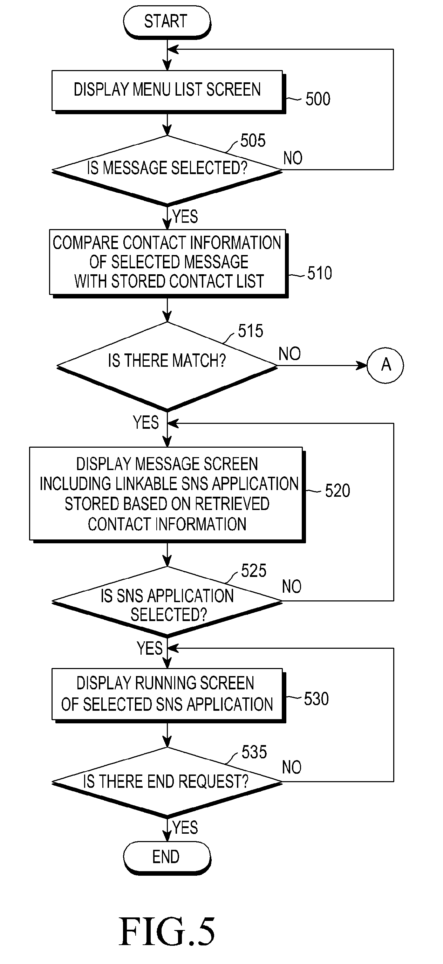

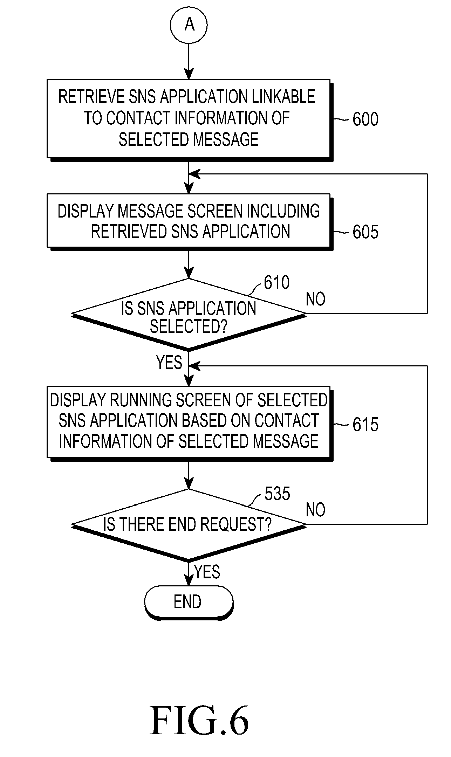

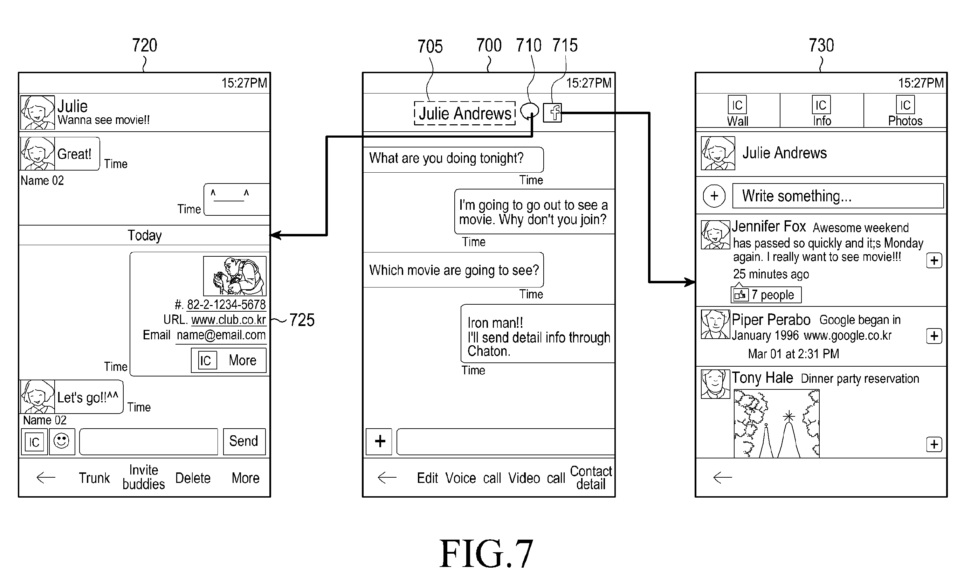

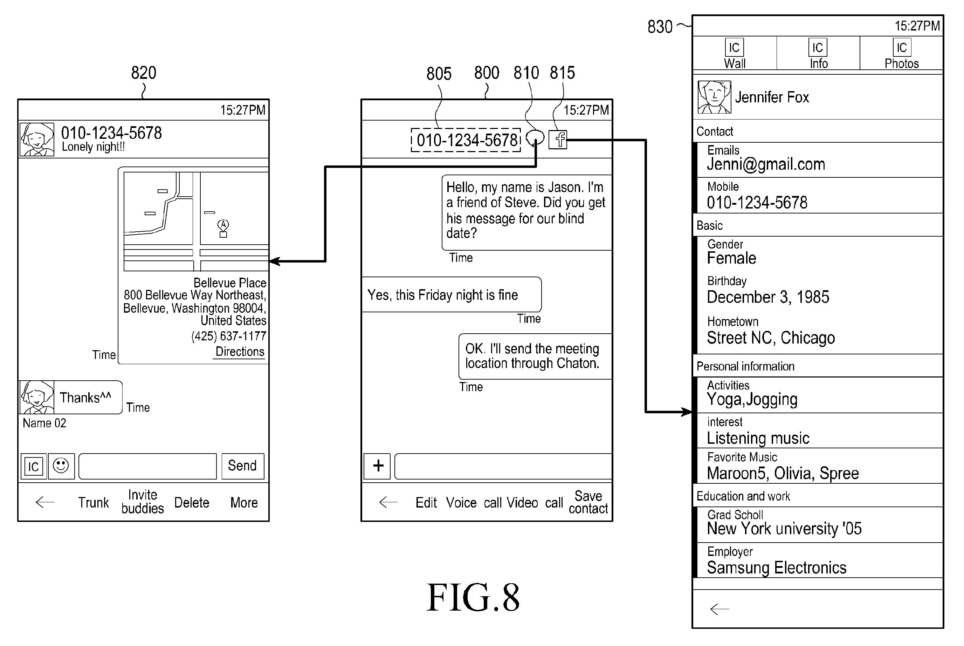

FIG. 5 is a schematic flowchart illustrating a method of linking to an application based on the other party's contact information stored in a mobile device according to an exemplary embodiment of the present invention. FIG. 6 is a schematic flowchart illustrating a method of linking to an application based on the other party's contact information not stored in a mobile device according to an exemplary embodiment of the present invention. FIG. 7 illustrates screens in terms of the method of FIG. 5 according to an exemplary embodiment of the present invention. FIG. 8 illustrates screens in terms of the method of FIG. 6 according to an exemplary embodiment of the present invention.

Referring to FIG. 5, steps 500 and 505 are substantially the same as steps 400 and 405 of FIG. 4, thus descriptions thereof will be omitted. Upon selection of a message at step 505, the controller 110 compares contact information of a message with a contact list stored in the storage 175, at step 510. Based on the comparison, the controller 110 determines whether the contact information has a match in the contact list, at step 515. If there is no match, the controller 110 goes to step 600 of FIG. 6, which will be described later.

If the contact information has the match in the contact list at step 515, the controller 110 displays a message screen based on the matched contact information at step 520, the message screen including a linkable SNS application. If the other party corresponding to the matched contact information already signs up for SNS, such as Twitter, Facebook and the like, the mobile device may map and store in the contact list at least one available SNS application for the contact information of the other party. In this case, a process of determining whether the other party signs up for the SNS application may be omitted before the controller 110 runs the SNS application. That is, a process of transmitting the contact information of the other party to a server of the SNS application and confirming from the server whether the other party signs up for the SNS application may be omitted.

Exemplary embodiments of such a message screen are shown in FIG. 7. In a message screen 700 of FIG. 7, indicators 710 and 715 to represent the linkable SNS application are placed within an area where contact information 705 is displayed. If contact information of the other party for a transmitted or received message has a match in the contact list, the name 705 of the other party is displayed instead of his/her phone number to show who the other party is. The message screen 700 is an interactive message screen that enables the user to check sent or received messages in a single screen e.g., in which all messages sent by the recipient are displayed in speech bubbles and a message is sent by entering the message in a text entry box located in the lower part of the message screen 700 and selecting an icon for transmission. In this manner, the user of the mobile device communicates messages with the other party.

In the message screen 700, the controller 110 determines whether any SNS application is selected at step 525. The controller 110 goes back to step 520 where the interactive message screen is displayed as long as no SNS application is selected. On the other hand, if any SNS application is selected, the controller 110 displays a running screen of the SNS application at step 530. The controller 110 performs operations resulting from running of the selected SNS application until there is an end request at step 535. That is, the controller 110 stops running the SNS application if there is the end request at step 535.

For example, the user selects any of the indicators 710 and 715 placed adjacent to the contact information, e.g., the name of the other party, and the screen configuration to be controlled may vary depending on the application that corresponds to the selected indicator. In FIG. 7, a first SNS running screen 720 corresponds to an interactive SNS running screen like the interactive message screen, in which sent or received messages are displayed in a single screen, and a second SNS running screen 730 is a mini-homepage screen. Through the mini-homepage screen 730, the user of the mobile device may send messages to the other party as well as easily check different optional information about the other party e.g., by checking Facebook postings. As a screen configuration to be controlled may vary depending on the server that offers a service corresponding to the selected application, SNS running screens also vary by application.

If a ChatOn application and a Facebook Application are mapped to the contact information of the other party to communicate with and stored in the contact list, the contact information, any application(s) retrieved for the contact information, e.g., indicators 710 and 715 representing ChatOn and Facebook, respectively, and content of the sent or received messages are displayed in the interactive message screen 700. The exemplary embodiment of the present invention illustrates the message screen 700 having such indicators 710 and 715 displayed together, but display positions of the indicators 710 and 715 are not limited to what are shown in FIG. 7. For example, display positions of the indicators 710 and 715 may be placed in areas that do not overlap with other menu items. Icons to run applications may be displayed in a predetermined image or in a combined form of an image and text.

In the message screen 700, whether to use substitute contact information and an associated application for the other party may also be displayed, and thus the user may get a glimpse into available SNS applications for the other party without need to retrieve every SNS application the user wants from among many application icons displayed on the touch screen 190.

For example, if a message being written by the user exceeds the predetermined letter counts and is thus expected to be sent in an MMS message, the user may immediately choose an SNS application he/she wants in the message screen. Choosing the SNS application to send a message may allow the user to save the cost of sending the MMS message and to use relatively large transmission capacity supported by the SNS application, thus allowing the user to make an easier contact with the other party. Furthermore, since the message screen 700 may be immediately changed to the first SNS running screen 720, the continuity of the conversation with the other party may be effectively guaranteed and thus, from the perspective of the user, management of the message history becomes easy.

The exemplary embodiment of the present invention illustrates SNS applications, such as ChatOn and Facebook as an example of applications that use the contact information, but other applications, e.g., email applications may also be retrieved and displayed. For example, if any other contact information, e.g., an email address of the other party who sent the message is retrieved, the controller 110 may display the indicator to represent the SNS application as well as an indicator to represent an email application. The email address, which is substitute contact information for the contact information of the message, may be stored beforehand when the user registered the contact information or otherwise, may be provided from the email server in return for transmission of the contact information of the message to the email server. Thus, upon selection of the email application, the email application runs in the same way as described earlier and the running screen of the email application may be displayed.

The exemplary embodiment of FIG. 7 merely illustrates where an application that may be associated with contact information is displayed with the contact information, but when a proximity access over the touch screen 190 is made by an input means, i.e., a pen hovering event is detected in the area where the contact information is displayed, the controller 110 may display an application that may be linked to the contact information in the form of a recommended icon within the area where the contact information is displayed or in a predetermined area. The application that may be linked to the contact information may be displayed to be overlapped with the previously displayed contact information or any other object.

The exemplary embodiment of the present invention where contact information of a message is not stored beforehand will now be described in connection with FIG. 6.

Referring to FIG. 6, if the selected contact information has no match in the contact list at step 515 of FIG. 5, the controller 110 retrieves at least one SNS application that may be linked to the selected contact information at step 600. In this case, a process to confirm the at least one application that may be linked to the contact information of the message from a plurality of servers offering respective SNS applications needs to be performed. More specifically, to determine whether there is the at least one application that may be linked to the contact information of the message, the controller 110 determines whether the other party signs up for any corresponding SNS(s) by transmitting the contact information to each of the plurality of servers for the SNS applications installed in the mobile device and receiving information about the SNS associated with the contact information. The controller 110 then retrieves any application(s) for the SNS(s) that the other party signs up for and displays a message screen containing the retrieved SNS application(s) at step 605.

Referring to FIG. 8, in a message screen 800, the contact information of the message is displayed as a phone number 805 because the contact information is not stored beforehand and indicators 810 and 815 to represent SNS applications for SNSs that the other party of the contact information signs up for are displayed. For example, when ChatOn, Facebook, and Twitter applications have been installed in the mobile device 100, the controller 110 determines whether the other party signs up for ChatOn, Facebook, or Twitter using the contact information of the other party. As a result, for example, if it is determined that the other party does not sign up for Twitter, the controller 800 only displays ChatOn and Facebook indicators in the message screen 800.

The controller 110 determines whether any of the SNS application indicators is selected in the message screen 800, at step 610. If no SNS application indicator is selected, the process returns to step 605. Otherwise, if any SNS application indicator is selected, the controller 110 displays the running screen of the SNS application selected based on the contact information of the message, at step 615. Next, the process keeps performing the operation of step 615 until an end request is received at step 535.

For example, in the case where the user selects the ChatOn application indicator in the message screen 800, a ChatOn running screen 820 is displayed. In this case, since the user has not registered the other party as a friend in the ChatOn service, the user may only see brief information about the other party but is able to use large-capacity data transmission offered by the ChatOn service. For example, to show a map of a meeting place to the other party, the user only needs to run the ChatOn application to transmit the map easily and quickly without a need to directly search for the map. That is, transmission of information becomes easy by running the ChatOn application associated with a map application. On the other hand, if the user selects the Facebook application indicator 815, a Facebook running screen 830 for the other party is displayed. In this case, since the other party signs up for Facebook but has not registered as a friend of the user of the mobile device 100, the controller 110 displays the running screen 830 in which brief information about the other party, e.g., a public profile of the other party configured based on SNS information about the contact information provided by the corresponding server when determining whether the other party signs up for Facebook is displayed. That is, the running screen 830 of the Facebook application may be configured with the public profile information provided by the Facebook server.

Exemplary embodiments of the present invention may also apply to a situation in which contact information of a message is not for a person but is representative contact information of an organization or group.

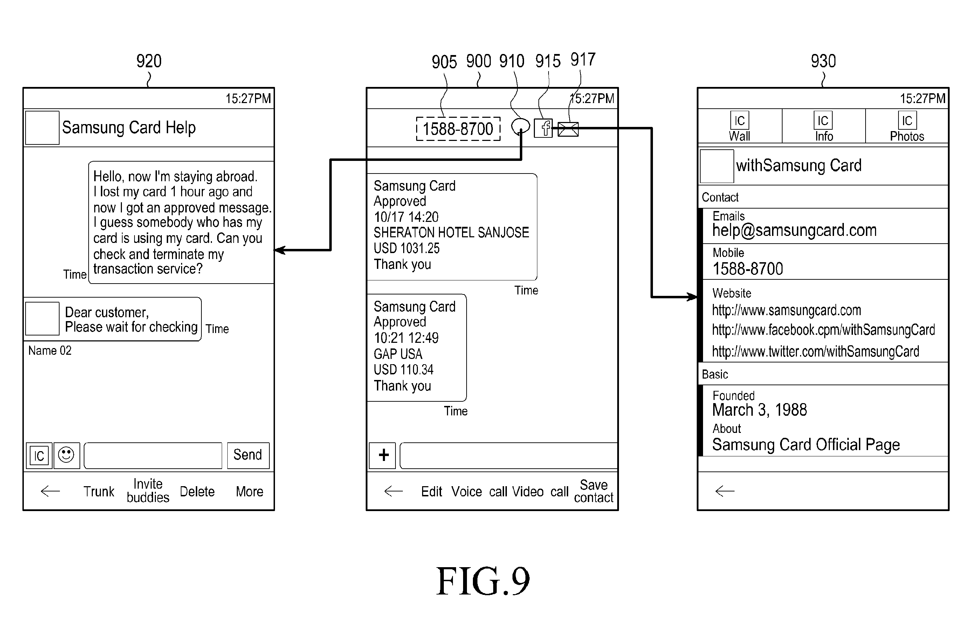

FIG. 9 illustrates screens in terms of a method of linking an application based on representative contact information of an organization or a group, according to an exemplary embodiment of the present invention.

Referring to FIG. 9, contact information 905 of a message is representative contact information of an organization or a group and SNS application indicators 910 and 915 and an application indicator 917 for the contact information are displayed in a message screen 900. When it comes to message transmission of the organization or the group, only unidirectional message transmission from the organizations or the group has thus been possible and customers who received the message and wanted to contact the organization or the group had to find and contact a separate customer center of the organization or the group. However, according to exemplary embodiments of the present invention, any of running screens 920 and 930 of applications that may be linked to the representative contact information of the organization or the group may be displayed so that the user may bi-directionally communicate with the organization or the group.

The running screen 920 or 920 of the application that corresponds to any selected indicator 910 or 915 may be a mobile website screen hosted by the organization or the group. As shown in the mobile website screens 920 and 930, the user may conveniently run the SNS application and immediately use e.g., promotion or one-to-one customer consulting services, while the organization or the group may provide users with the promotion and such services more easily and quickly through the official website or some information guide of a professional help center.

According to exemplary embodiments of the present invention, the user may easily access an additional contact means and associated application based on contact information of the other party in the text messaging screen. Furthermore, the user may easily check information about the other party in addition to the other party's phone number, name and the like in the text messaging screen. According to exemplary embodiments of the present invention, an environment providing easy access to an SNS application linked to contact information is implemented, thus increasing usability and convenience of the mobile device. Furthermore, a text messaging screen may be changed into an SNS application running screen, thus saving the cost of message transmission and providing more efficient environment to send large-capacity data, such as photos, videos, and the like.

It will be appreciated that the exemplary embodiments of the present invention may be implemented in a form of hardware, software, or a combination of hardware and software. The software may be stored as program instructions or computer readable codes executable on the processor on a computer-readable medium. Examples of the computer readable recording medium include magnetic storage media (e.g., ROM, floppy disks, hard disks, etc.), and optical recording media (e.g., CD-ROMs, or DVDs). The computer readable recording medium can also be distributed over network coupled computer systems so that the computer readable code is stored and executed in a distributed fashion. This media can be read by the computer, stored in the memory, and executed by the processor. The memory included in the power transmitter or the power receiver may be an example of the computer readable recording medium suitable for storing a program or programs having instructions that implement the embodiments of the present invention.

The mobile device may receive the program from a program provider wired/wirelessly connected thereto, and store the program. The program provider may include a program having instructions for the mobile device to perform the method of linking SNS applications, a memory for storing information required for the method, a communication unit for wiredly/wirelessly communicating with the mobile terminal, and a controller for receiving a request from the mobile terminal and delivering corresponding programs to the mobile device.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method of linking a Social Network Service (SNS) application in a mobile device, the method comprising:
retrieving at least one application from among a plurality of applications, which is linkable based on contact information of a message requested to be output;
displaying the message with respective indicators to represent the at least one application; and
displaying, upon selection of any of the respective indicators to represent the at least one application, a running screen of an application represented by the selected indicator.

2. The method of claim 1, wherein the at least one application comprises an SNS application.

3. The method of claim 1 or 2, wherein the respective indicators to represent the at least one application are displayed in an icon form in an area where the contact information of the message is displayed.

4. The method of one of claim 1 to 3, further comprising:
comparing the contact information of the message with a stored contact list before the retrieving of the at least one application;
determining if the contact information has a match in the contact list; and
retrieving at least one SNS application stored beforehand to correspond to the match if the contact information has the match.

5. The method of one of claim 1 to 4, further comprising:
confirming from respective servers providing the plurality of applications about the at least one application that is linkable to the contact information of the message if the contact information has no match in the contact list.

6. The method of one of claim 1 to 5, further comprising:
retrieving substitute contact information of the other party who sent the message based on the contact information of the message; and
displaying an indicator to represent the substitute contact information with the respective indicators to represent the at least one application while displaying the message.

7. The method of one of claim 1 to 6, wherein the substitute contact information comprises an email address of the other party who sent the message which is displayed as an icon that represents email in an area in which the contact information of the message is displayed.

8. The method of one of claim 1 to 7, wherein the running screen of the application represented by the selected indicator comprises a screen of a mobile website hosted by an organization or a group if the contact information of the message corresponds to representative contact information of the organization or the group.

9. An apparatus for linking a Social Network Service (SNS) application in a mobile device, the apparatus comprising:
a storage configured to r store a contact list;
a display unit configured to display a message list screen; and
a controller configured to retrieve at least one application from among a plurality of applications, which is linkable based on contact information of a message requested to be output in the message list screen, control to display the message with respective indicators to represent the at least one application, and control to display, upon selection of any of the respective indicators to represent the at least one application, a running screen of an application represented by the selected indicator in the display unit.

10. The apparatus of claim 9, wherein the at least one application comprises an SNS application.

11. The apparatus of claim 9 or 10, wherein the controller compares the contact information with the contact list, determines if the contact information has a match in the contact list, and retrieves, if the contact information has the match, at least one stored SNS application corresponding to the match, and displays respective indicators to represent the at least one SNS application in icon form in an area where the contact information of the message is displayed.

12. The apparatus of one of claim 9 to 11, wherein the controller confirms from respective servers providing the plurality of applications about the at least one application that is linkable to the contact information of the message, if the contact information has no match in the contact list.

13. The apparatus of one of claim 9 to 12, wherein the running screen of the application represented by the selected indicator comprises a screen of a mobile website hosted by an organization or a group if the contact information of the message corresponds to representative contact information of the organization or the group.

14. The apparatus of one of claim 9 to 13, wherein the controller retrieves substitute contact information of the other party who sent the message based on the contact information of the message, and displays an indicator to represent the substitute contact information with the respective indicators to represent the at least one application while displaying the message.

15. The apparatus of one of claim 9 to 14, wherein the substitute contact information comprises an email address of the other party who sent the message which is displayed as an icon that represents email in an area in which the contact information of the message is displayed.
